# EUROPEAN PATENT APPLICATION

(11) **EP 4 465 086 A1**
(43) Date of publication of application: **20.11.2024**
(21) Application number: 23173817.0
(22) Date of filing: 17.05.2023
(51) Int. Cl.: G01S 13/32, G01S 13/86, G08B 13/181, G08B 13/19, G01S 13/88, G01S 7/41, G01S 13/56

(54) **INTRUDER DETECTION SYSTEM**

(71) Applicant: Climax Technology Co., Ltd., Taipei 114 (TW)
(72) Inventor: CHEN, Yi-Kai, 10850 Taipei City (TW)
(74) Representative: Karakatsanis, Georgios

(57) **Abstract**

An intruder detection system includes a millimeter-wave (mmWave) radar that detects an object and determines a property thereof; an image capture device that generates a captured image representing a scene under monitoring; and a processor that determines whether the object is a human according to an output signal of the mmWave radar.

## Description

### BACKGROUND OF THE INVENTION

### 1. FIELD OF THE INVENTION

The present invention generally relates to an intruder detection system, and more particularly to an intruder detection system with a millimeter-wave radar.

### 2. DESCRIPTION OF RELATED ART

A passive infrared (PIR) sensor is an electronic device that detects infrared (IR) radiation emitted by objects in its field of view. PIR sensors are widely used for motion detection in security systems for detecting intruders.

One of the challenges of using PIR sensors for security purposes is that they cannot distinguish between different sources of infrared radiation. PIR sensors measure the changes in infrared light that occur when an object moves in front of them, but they do not provide any information on who or what is moving. Therefore, both humans and animals can trigger the PIR sensors, as they both emit infrared rays. Moreover, environmental factors such as changes in temperature or the flow of hot gas can also cause false alarms in the security system, as they can affect the infrared radiation levels in the sensor's field of view.

A need has thus arisen to propose a novel scheme to overcomes drawbacks of conventional intruder detection systems, such as high false alarm rates and susceptibility to environmental interference, and to enhance the security and reliability of intruder detection systems.

### SUMMARY OF THE INVENTION

In view of the foregoing, it is an object of the embodiment of the present invention to provide an intruder detection system capable of accurately determining an intrusion by a human.

According to one embodiment, an intruder detection system includes a millimeter-wave (mmWave) radar, an image capture device and a processor. The millimeter-wave (mmWave) radar detects an object and determines a property thereof. The image capture device generates a captured image representing a scene under monitoring. The processor determines whether the object is a human according to an output signal of the mmWave radar.

### BRIEF DESCRIPTION OF THE DRAWINGS

FIG. 1 shows a block diagram illustrating an intruder detection system according to one embodiment of the present invention; and
FIG. 2 shows a flow diagram illustrating an intruder detection method adaptable to the intruder detection system of FIG. 1.

### DETAILED DESCRIPTION OF THE INVENTION

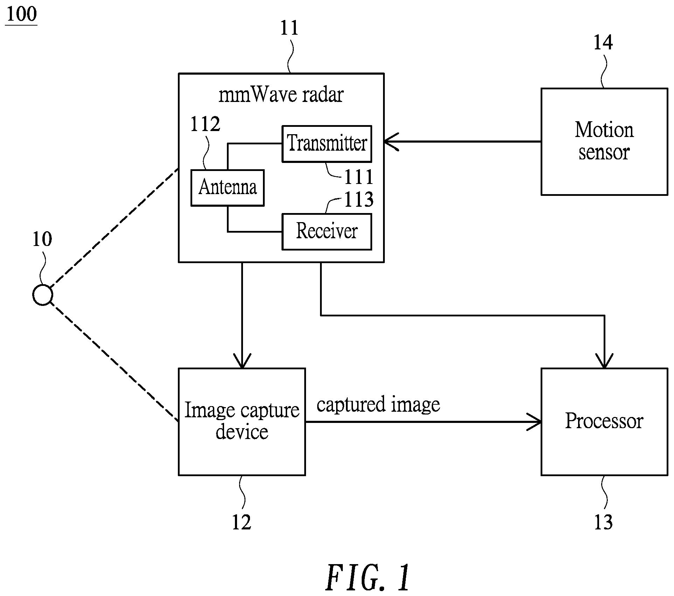

FIG. 1 shows a block diagram illustrating an intruder detection system 100 according to one embodiment of the present invention. The intruder detection system 100 of the embodiment may be used as a security measure to detect when someone has entered a building (e.g., home) under monitoring. The intruder detection system 100 may be used to provide an early warning of an intruder, and be adapted to smart homes based on Internet of things (IoT) to notify the entrance of an intruder or any person to specific areas.

According to one aspect of the embodiment, the intruder detection system 100 may include a millimeter-wave radar (mmWave radar) 11 configured to detect a (moving) object 10 and determine properties (e.g., size and position) thereof. Specifically, mmWave radar 11 is a radar operating in millimeter-wave band of 30-300 GHz (or wavelength of 1-10 mm), which is between the centimeter wave and the light wave. Therefore, the mmWave radar 11 has the advantages of microwave navigation and photoelectric navigation. It is particularly noted that, as the mmWave radar 11 operates in the millimeter-wave band of 30-300 GHz, the mmWave radar 11 is not affected by environmental interferences such as temperature and heat, as compared to conventional sensors, thereby substantially reducing false detections caused by environmental interferences.

Generally speaking, the mmWave radar 11 may include a transmitter 111 for producing electromagnetic waves in the millimeter-wave band, a (transmitting and receiving) antenna 112 for transmitting the electromagnetic waves produced by the transmitter 111, and a receiver 113 for determining properties (e.g., size and location (or distance)) of the object 10 according to reflected electromagnetic waves reflected from the object 10 (and received by the antenna 112).

The intruder detection system 100 of the embodiment may include an image capture device 12, such as an image sensor, configured to convert light waves into a captured image representing a scene (or field of view) under monitoring including the object 10. In one embodiment, the image captured device 12 is battery powered, and is adaptable to a smart home.

In the embodiment, the mmWave radar 11 may activate the image capture device 12 to generate the captured image when the object 10 is detected by the mmWave radar 11. In other words, the image capture device 12 is normally turned off, and is turned on (i.e., activated) only when the object 10 is detected by the mmWave radar 11.

In one specific embodiment, the image capture device 12 is activated only when the object 10 enters a predetermined range (within the scene or the field of view). Therefore, a clear captured image may be obtained (due to match between the focal length of the image capture device 12 and the distance between the object 10 and the image capture device 12) and be utilized for subsequent image processing, thereby reducing power consumption (of the image capture device 12), increasing efficiency and improving the quality of the captured image. Furthermore, this can prevent unnecessary or unwanted images from being captured and processed, thereby enhancing the privacy and security of the intruder detection system 100.

The intruder detection system 100 of the embodiment may include an (image) processor 13 configured to determine whether the object 10 is a human according to an output signal of the mmWave radar 11. Further, the processor 13 may perform a subsequent image operation on the captured image (captured from the image capture device 12).

The subsequent image operation as mentioned above may include manual visual verification or image processing (such as enhancement, recognition or analysis) based on artificial intelligent (AI) filtering. AI-based image filtering or processing refers to a technique that uses AI algorithms to filter images to facilitate removing noise from images, enhancing image quality and performing other image processing tasks. AI filtering can be used to improve the accuracy of image recognition algorithms by removing noise and other artifacts from images.

In one embodiment, the intruder detection system 100 may optionally include a motion sensor 14, such as passive infrared (PIR) motion sensor, configured to detect motion of the object 10. The PIR motion sensor refers to a sensor that detects motion by sensing changes in the infrared (i.e., radiant heat) levels emitted by the object 10. The PIR motion sensor is passive because it does not emit any energy but detect the energy emitted by the object 10.

According to a further aspect of the embodiment, the motion sensor 14 activates the mmWave radar 11 when motion of the object 10 is detected by the motion sensor 14. In other words, the mmWave radar 11 is normally turned off, and is turned on only when the motion sensor 14 has detected motion of the object 10. It is particularly noted that although the mmWave radar 11 generally consumes more power than the motion sensor 14 (but detects the object 10 more accurately than the motion sensor 14), the mmWave radar 11 in companion with the motion sensor 14 can substantially reduce power consumption and increase efficiency and performance.

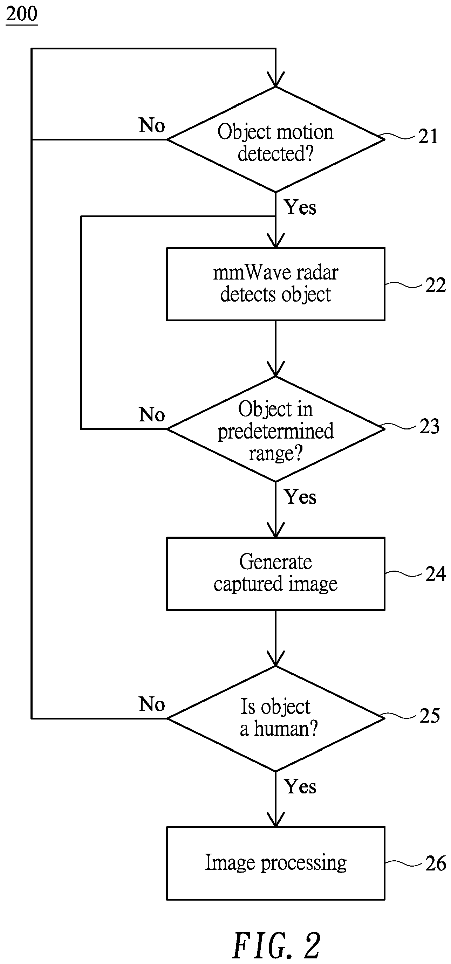

FIG. 2 shows a flow diagram illustrating an intruder detection method 200 adaptable to the intruder detection system 100 of FIG. 1. Specifically, in step 21, the motion sensor 14 is optionally adopted to detect motion of a (moving) object 10. When motion of the object 10 is detected (e.g., infrared level of a passive infrared (PIR) motion sensor is greater than a predetermined threshold), the motion sensor 14 then activates the mmWave radar 11 to detect the object 10 and to determine properties (e.g., size and position) thereof (step 22); otherwise the flow goes back to step 21. In other words, the mmWave radar 11 is normally turned off, and is turned on only when the motion sensor 14 has detected motion of the object 10, thereby reducing power consumption and increasing efficiency and performance. It is noted that step 21 may be optionally performed as the motion sensor 14 is optionally adopted.

In step 23, when the object 10 enters a predetermined range, the mmWave radar 11 activates the image capture device 12 to generate a captured image (step 24); otherwise, the flow goes back to step 22. Therefore, a clear captured image may be obtained (due to match between the focal length of the image capture device 12 and the distance between the object 10 and the image capture device 12) and be utilized for subsequent image processing, thereby reducing power consumption (of the image capture device 12), increasing efficiency and improving the quality of the captured image. Furthermore, this can prevent unnecessary or unwanted images from being captured and processed, thereby enhancing the privacy and security of the intruder detection method 200.

In step 25, the processor 13 determines whether the object 10 is a human. In one embodiment, the object 10 is initially determined as a human when a size as determined by the mmWave radar 11 is greater than a predetermined threshold. Otherwise, the object 10 is determined as a nonhuman object such as an animal, and the flow goes back to step 21. Therefore, false detections can be substantially reduced.

After a human is initially determined (step 25), the processor 13 may further perform image processing (such as enhancement, recognition or analysis) on the captured image (captured by the image capture device 12), for example, based on artificial intelligent (AI) filtering (step 26), thereby facilitate removing noise from images, enhancing image quality and performing other image processing tasks. Accordingly, an intrusion by a human may be further confirmed, and subsequent alarm and personnel dispatching may be executed. In one embodiment, the image processing performed to confirm a human intruder may include, for example, analyzing shape and size of the object 10, analyzing color and texture of the object 10, or using a pattern recognition technique to identify specific features of the object 10.

## Claims

1. An intruder detection system (100), comprising:
a millimeter-wave radar (11) that detects an object (10) and determines a property thereof;
an image capture device (12) that generates a captured image representing a scene under monitoring; and
a processor (13) that determines whether the object is a human (25) according to an output signal of the millimeter-wave radar.

2. The system of claim 1, wherein the property of the object comprises size or position of the object.

3. The system of claim 1, wherein the millimeter-wave radar comprises:
a transmitter (111) that produces electromagnetic waves in a millimeter-wave band;
an antenna (112) that transmits the electromagnetic waves produced by the transmitter; and
a receiver (113) that determines the property of the object according to reflected electromagnetic waves reflected from the object and received by the antenna.

4. The system of claim 1, wherein the image capture device comprises an image sensor.

5. The system of claim 1, wherein the millimeter-wave radar activates the image capture device to generate the captured image when the object is detected by the millimeter-wave radar.

6. The system of claim 1, wherein the image capture device is activated (24) only when the object enters a predetermined range (23).

7. The system of claim 1, wherein the object is initially determined as a human when a size of the object as determined by the millimeter-wave radar is greater than a predetermined threshold.

8. The system of claim 7, wherein the processor further performs a subsequent image operation (26) on the captured image after the object is initially determined as a human, thereby confirming an intrusion by a human.

9. The system of claim 8, wherein the subsequent image operation comprises manual visual verification or image processing.

10. The system of claim 9, wherein the image processing is performed based on artificial intelligent filtering.

11. The system of claim 9, wherein the image processing comprises analyzing shape and size of the object, analyzing color and texture of the object, or using a pattern recognition technique to identify specific features of the object.

12. The system of claim 1, further comprising:
a motion sensor (14) that detects motion of the object (21).

13. The system of claim 12, wherein the motion sensor comprises a passive infrared motion sensor.

14. The system of claim 12, wherein the motion sensor activates the millimeter-wave radar (22) when motion of the object is detected by the motion sensor.

## Amended claims

### Amended claims in accordance with Rule 137(2) EPC.

1. An intruder detection system (100), comprising:
a millimeter-wave radar (11) that detects an object (10) and determines a property thereof;
an image capture device (12) that generates a captured image representing a scene under monitoring; and
a processor (13) that determines whether the object is a human (25) according to an output signal of the millimeter-wave radar, **characterized in that**
the image capture device is activated by the millimeter-wave radar only when the object enters a predetermined range (23) within which focal length of the image capture device and a distance between the object and the image capture device are matched to capture a clear image, and the predetermined range prevents unwanted image from being captured in consideration of privacy.

2. The system of claim 1, wherein the property of the object comprises size or position of the object.

3. The system of claim 1, wherein the millimeter-wave radar comprises:
a transmitter (111) that produces electromagnetic waves in a millimeter-wave band;
an antenna (112) that transmits the electromagnetic waves produced by the transmitter; and
a receiver (113) that determines the property of the object according to reflected electromagnetic waves reflected from the object and received by the antenna.

4. The system of claim 1, wherein the image capture device comprises an image sensor.

5. The system of claim 1, wherein the millimeter-wave radar activates the image capture device to generate the captured image when the object is detected by the millimeter-wave radar.

6. The system of claim 1, wherein the object is initially determined as a human when a size of the object as determined by the millimeter-wave radar is greater than a predetermined threshold.

7. The system of claim 6, wherein the processor further performs a subsequent image operation (26) on the captured image after the object is initially determined as a human, thereby confirming an intrusion by a human.

8. The system of claim 7, wherein the subsequent image operation comprises manual visual verification or image processing.

9. The system of claim 8, wherein the image processing is performed based on artificial intelligent filtering.

10. The system of claim 8, wherein the image processing comprises analyzing shape and size of the object, analyzing color and texture of the object, or using a pattern recognition technique to identify specific features of the object.

11. The system of claim 1, further comprising:
a motion sensor (14) that detects motion of the object (21).

12. The system of claim 11, wherein the motion sensor comprises a passive infrared motion sensor.

13. The system of claim 11, wherein the motion sensor activates the millimeter-wave radar (22) when motion of the object is detected by the motion sensor.
